# EUROPÄISCHE PATENTSCHRIFT

(11) **EP 2 741 888 B1**
(45) Veröffentlichungstag und Bekanntmachung des Hinweises auf die Patenterteilung: **26.08.2015**
(21) Anmeldenummer: 12758503.2
(22) Anmeldetag: 14.09.2012
(51) Int. Cl.: B23K 26/38, B23K 37/00, B23Q 11/08, E05F 15/00, E06B 9/84, E06B 9/88, F16P 3/08

(54) **LASERBEARBEITUNGSMASCHINE MIT EINER SCHUTZTÜRE UND EINE STEUEREINRICHTUNG**
LASER MACHINE TOOL COMPRISING A PROTECTING DOOR AND A CONTROL DEVICE
MACHINE DE TRAITEMENT LASER COMPORTANT UNE PORTE DE PROTECTION ET UN DISPOSITIF DE COMMANDE

(30) Priorität: 16.09.2011 DE 102011082883
(43) Veröffentlichungstag der Anmeldung: 18.06.2014
(73) Patentinhaber: TRUMPF Laser GmbH, 78713 Schramberg (DE)
(72) Erfinder: DÖTTLING, Jürgen, 78713 Schramberg (DE); GANTER, Robert, 70839 Gerlingen (DE); BANHOLZER, Rainer, 78662 Bösingen (DE)
(74) Vertreter: Prüfer & Partner GbR European Patent Attorneys
(86) Internationale Anmeldenummer: PCT/EP2012/068024
(87) Internationale Veröffentlichungsnummer: WO 2013/037927

(56) Entgegenhaltungen:
- EP-A2- 0 738 559
- DE-A1- 3 709 592
- DE-A1-102006 022 304
- DE-B1- 2 929 837
- US-A1- 2004 088 922

## Beschreibung

Die Erfindung betrifft eine Laserbearbeitungsmaschine gemäß dem Oberbegriff des Anspruchs 1 (siehe, z.B., DE 10 2006 022 304 A), insbesondere betrifft die Erfindung eine Absicherungseinrichtung für eine schnell laufende Schutztüre einer Bearbeitungsmaschine.

Die Arbeitsbereiche von Bearbeitungsmaschinen werden durch Schutzabdeckungen abgeschirmt, um zum einen zu verhindern, dass Teile, wie z.B. Späne, oder Flüssigkeiten, wie z.B. Schmier- und Kühlemulsionen, oder auch reflektierte Laserstrahlen aus dem Arbeitsbereich austreten. Weiterhin wird durch solche Schutzabdeckungen verhindert, dass Bediener oder andere Personen während der Bearbeitung in den Arbeitsbereich greifen, wodurch Verletzungen auftreten können.

Um trotzdem während Bearbeitungspausen in den Arbeitsraum greifen zu können, sind Schutztüren in den Schutzabdeckungen vorgesehen, die einen Zugriff zu dem Arbeitsbereich ermöglichen. Die Schutztüren sind entweder manuell zu bedienen und mit einem Sicherheitsschalter versehen, so dass die Maschine nur in Betrieb gehen kann, wenn die Schutztüre geschlossen ist. Die manuell zu bedienende Schutztüre ist während des Betriebs verriegelt, oder alternativ stoppt der Betrieb der Maschine sofort, wenn die Schutztüre geöffnet wird. Alternativ zu einer manuellen Bedienung der Schutztüre ist es auch üblich, die Schutztüre mit einem Antrieb zu versehen. Dadurch ergibt sich der Vorteil, dass die Schutztüre sofort nach Beendigung eines Arbeitsganges geöffnet werden kann. Dadurch wird dem Bediener ohne Zeitverlust ein Zugang zu dem Arbeitsraum, z.B. zum Auswechseln der bearbeiteten Teile oder zum Rüsten der Maschine, ermöglicht. Nach dem Eingriff in den Arbeitsraum der Maschine wird die Schutztüre dann wieder automatisch geschlossen.

Falls der Bediener oder eine andere Person während des Schließvorgangs der Schutztüre in den Arbeitsraum greift, wird dies bei automatisch bewegten Türen zur Unfallvermeidung von Bandschaltern oder Lichtschranken erkannt.

Um die Stillstandszeiten der Maschine zu reduzieren, was hinsichtlich der Taktzeit und somit der Produktivität relevant ist, ist es günstig, die Schutztüre möglichst mit hoher Geschwindigkeit zu öffnen und zu schließen. Dabei besteht aber die Gefahr, dass, wenn der Bediener während des Schließvorgangs in den Arbeitsraum greift, bei einer schnellen Schließbewegung der Schutztüre diese nicht rechtzeitig anhalten kann. Dadurch wird der Bediener trotz der Schutzeinrichtung von der Schutztüre zumindest schmerzhaft getroffen.

Aus diesem Grund ist es auch nicht zulässig, dass sich Bedienpersonal während der Schließbewegung in unmittelbarer Nähe der Schutztüre aufhält. Dies kann zum einen relevant für einen ergonomischen Arbeitsablauf sein, beeinflusst aber auch die Taktzeit negativ.

Aus der Veröffentlichung der europäischen Patentanmeldung EP 0 738 559 A2 ist ein Türschließmechanismus bekannt, bei dem ein Pneumatikzylinder eine Schutztüre einer Werkzeugmaschine automatisch öffnet und schließt. Der Pneumatikzylinder ist an einer Verkleidung der Maschine verschiebbar befestigt, wobei er durch eine Feder in der Schließrichtung der Schutztüre vorgespannt ist. Beim Auftreffen der Schutztüre auf ein Hindernis wird der Pneumatikzylinder gegen die Federkraft verschoben und ein Schalter wird betätigt, so dass die Schutztüre anhält und sofort wieder geöffnet wird. Dabei ergibt sich aber das Problem, dass eine schnell laufende Schutztüre mit unvermindertem Impuls auf beispielsweise einen Arm des Bedieners auftrifft, wenn der Arm während des Schließvorgangs in den Arbeitsraum der Werkzeugmaschine gehalten wird. Dadurch können zumindest kleine Verletzungen, wie z.B. Hämatome, auftreten.

Es ist also die Aufgabe der Erfindung, eine Person gegen die mechanische Gefährdung einer schnell laufenden Schutztüre abzusichern.

Die Aufgabe wird durch eine Laserbearbeitungsmaschine gemäß Anspruch 1 gelöst.

Bei einem Auftreffen einer sich schließenden Schutztüre auf ein Hindernis, z.B. einem Arm eines Bedieners, wird das mit dem Schutzelement verbundene Schaltelement betätigt, so dass die Schutztüre angehalten oder sofort wieder geöffnet wird. Aufgrund des Bewegungsimpulses der Schutztüre ist es jedoch nicht möglich, dieses Anhalten oder diese Umkehrbewegung schlagartig auszuführen, so dass sich die Schutztüre noch einen gewissen Weg in der Schließrichtung bewegt. Um nicht den Bewegungsimpuls der gesamten Schutztüre auf den Arm des Bedieners auszuüben, wird ein Schutzelement, das an der Schutztüre auf einer Seite in der Schließrichtung beweglich angebracht ist, durch das Hindernis relativ in Richtung der Schutztüre gedrückt. Dadurch wird die auf den Bediener ausgeübte Kraft wesentlich reduziert. Die Schutztüre ist quasi mit einer reversiblen Knautschzone versehen.

Die Erfindung wird nun anhand eines Ausführungsbeispiels unter Bezugnahme auf die beigefügten Figuren beschrieben. Insbesondere zeigt:
- Fig. 1: eine Bearbeitungsmaschine mit einer Schutzabdeckung mit Schutztüren,
- Fig. 2a: eine Prinzipdarstellung der Schutztüre von vorne, und
- Fig. 2b: eine Prinzipdarstellung der in Fig. 2a gezeigten Schutztüre von einer Seite.

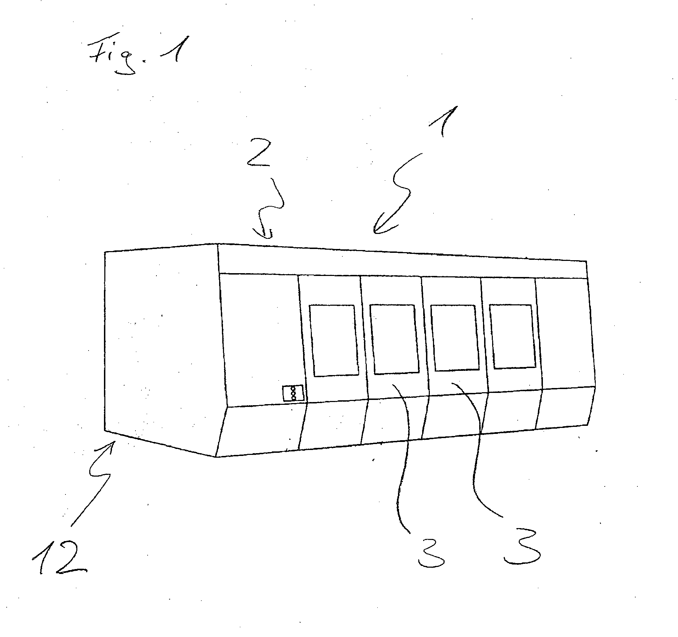

In Fig. 1 ist eine Ausführungsform einer Bearbeitungsmaschine 1 in Form einer Laserschneidmaschine gezeigt. Die Laserschneidmaschine weist eine Schutzabdeckung 2 in Form einer Schutzkabine auf. Die Schutzabdeckung 2 ist hier mit zwei Schutztüren 3 versehen, die in einer horizontalen Richtung zu öffnen sind. Die Anzahl der Schutztüren 3, deren Größe, und deren Öffnungsrichtung ist abhängig von der Größe und der Art der Bearbeitungsmaschine 1.

Die Bearbeitungsmaschine 1 ist mit einer Steuerungseinrichtung 12 zum Ansteuern ihrer Funktionen und zum Ansteuern der Bewegung der Schutztüren 3 ausgestattet.

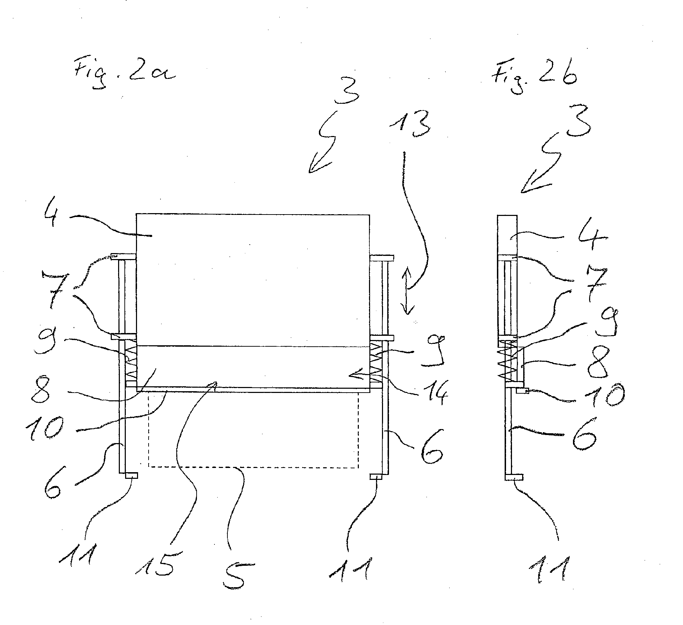

Prinzipdarstellung in Fig. 2a und 2b zeigen eine der Schutztüren 3, die in diesen Prinzipdarstellungen in einer vertikalen Richtung zu öffnen und zu schließen ist. Die Schutztüre 3 weist ein Türblatt 4 und ein Schutzelement 8 auf, deren Größen so ausgelegt sind, dass dadurch eine Türöffnung 5 verschließbar ist. Im Falle einer Laserbearbeitungsmaschine ist die Schutztüre 3 zu der Schutzabdeckung 2 (Fig. 1) in einer Schließ-Endlage überlappend und lichtdicht ausgeführt. Das Türblatt 4 ist mittels hier zweier Linearführungen 6, auf denen hier zwei Linearschlitten 7 verfahrbar geführt sind, bewegbar. Die Anzahl der Linearführungen 6 und die Anzahl der Linearschlitten 7 können abhängig von der Schutztürgröße und Bewegungsrichtung abweichen.

Das Schutzelement 8 ist auf der Seite der Schutztüre 3 in der Schließrichtung vorgesehen. Die Breite des Schutzelements 8 entspricht in etwa der Breite des Türblatts 4. Das Schutzelement 8 ist an dem Türblatt 4 beweglich befestigt und kann sich in der Öffnungs- und Schließrichtung der Schutztüre 3 um einen vorbestimmten Weg relativ zu dem Türblatt 4 bewegen. In der vorliegenden Ausführungsform bewegt sich das Schutzelement 8 relativ zu dem Türblatt 4 entlang einer Außenseite der Schutztüre 3. Das Schutzelement 8 kann sich alternativ auch entlang einer Innenseite der Schutztüre 3 oder innerhalb des Türblatts 4 bewegen, sofern das Türblatt 4 einen entsprechenden Hohlraum aufweist.

Das Schutzelement 8 besteht aus Blech. Alternativ kann das Blech auch aus anderen geeigneten Materialien, wie z.B. Kunststoffplatten hergestellt sein. In dieser Ausführungsform ist das Schutzelement 8 über zwei Federn 9 in der Schließrichtung der Schutztüre 3 nachgiebig gegen einen Endanschlag 14 vorgespannt. In alternativen Ausführungen, insbesondere bei einer vertikalen Schließrichtung, kann das Gewicht des Schutzelements 8 ausreichend sein, um durch die Gewichtskraft gegen den Endanschlag 14 vorgespannt zu sein, oder andere Vorspannelemente können vorgesehen sein.

Die Schutztüre 3 ist mit einem Antrieb 13 versehen, durch den die Öffnungs- und Schließbewegung der Schutztüre 3 ausgeführt wird. Der Antrieb 13 ist hier als elektrischer Linearantrieb ausgeführt, kann aber alternativ auch durch einen Pneumatikzylinder oder einen Hydraulikzylinder realisiert sein.

Die Bewegungen des Antriebs 13 werden durch die Steuerungseinrichtung 12 angesteuert. Das Kommando zum Öffnen der Schutztüre 3 wird nach einem Abschluss eines Bearbeitungsvorgangs, nach welchem ein Zugriff auf den Arbeitsraum erforderlich wird, durch die Steuerungseinrichtung 12 ausgelöst. Das Kommando zum Schließen der Schutztüre wird manuell durch den Bediener ausgelöst. Alternativ können auch Lichtschranken oder -vorhänge vorhanden sein, bei deren Freigabezustand ein Schließen der Schutztüre 3 ausgelöst wird.

An dem Schutzelement 8 ist ein Schaltelement 10 so angebracht, dass es in der Schließrichtung der Schutztüre 3 beim Auftreffen auf ein Hindernis schaltet. Hier ist das Schaltelement 10 an der Seite des Schutzelements 8 in der Schließrichtung über die gesamte Breite angebracht. Das Schaltelement 10 ist gemäß der Erfindung als ein elastischer Bandschalter ausgeführt.

Die Schutztüre 3 ist weiterhin mit Anschlägen 11 für das Schutzelement 8 versehen. Die Anschläge 11 sind so ausgebildet und angebracht, dass das Schutzelement 8 auf die Anschläge 11 auffahren kann, ohne dass das Schaltelement 10 davon betätigt wird.

In der Schutztüre 3 sind mindestens zwei Sensoren 15 vorgesehen. Die Sensoren 15 sind so ausgebildet und so angebracht, dass sie eine Position des Schutzelements 8 erfassen, wenn das Schutzelement 8 an dem Endanschlag 14 anliegt.

Im Betrieb fährt nach einem entsprechenden Kommando der Steuerungseinrichtung 12 das Türblatt 4 gemeinsam mit den Linearschlitten 7, dem Schutzelement 8, den Federn 9 und dem Schaltelement 10 in Schließrichtung, hier nach unten. Wenn kein Hindernis in der Schließrichtung vorhanden ist, fährt die Schutztüre 3 in eine Schließ-Endlage, in der die Türöffnung 5 im Falle der Laserbearbeitungsmaschine überlappend und lichtdicht geschlossen ist. Das Schutzelement 8 fährt dabei auf die Anschläge 11 auf, wobei sich das Schutzelement 8 von dem Endanschlag 14 entfernt, und federt ein, was durch die Sensoren 15 erfasst wird . Das Schaltelement 10 wird dabei nicht betätigt. Ein mit dem Betätigen des Schaltelements 10 verbundener Not-Halt wird somit vermieden.

Durch ein entsprechendes Kommando fährt die Schutztüre 3 in ihre Öffnungsposition, hier nach oben, wobei das Schutzelement 8 wieder vollständig gegen den Endanschlag 14 ausfedert. Das Erreichen der ausgefederten Position wird durch die Sensoren 15 überwacht, so dass gewährleistet ist, dass das Schutzelement 8 gegenüber dem Türblatt 4 maximal ausgefedert ist und dadurch seine Schutzwirkung ausüben kann.

Wenn beim Schließvorgang eine Kollision mit einem Hindernis, beispielsweise einem Körperteil, auftritt, wird das Schaltelement 10 betätigt, was zu einem Not-Halt führt. Die Schutztüre 3 wird dann mit einer maximalen Antriebsleistung in einem Abbremsweg zum Stillstand abgebremst. Da dies nicht schlagartig geschieht, sondern die Schutztüre einen gewissen Nachlauf hat, wird das an dem Hindernis anliegende Schutzelement 8 wegen dem Nachlauf relativ in Richtung des Türblatts 4 bewegt. Dies reduziert die Krafteinwirkung auf das Körperteil, da lediglich der Impuls des Schutzelements 8 und die Vorspannkraft der Federn 9 auf das Körperteil einwirken, ohne dass der Impuls der gesamten Schutztüre 3 auftrifft. Nach dem Stillstand wird die Schutztüre 3 dann sofort wieder geöffnet.

Das Schutzelement 8 ist bezüglich des Türblatts 4 so gelagert, dass es sich auch bei einem außermittigen Hindernis zuverlässig in Richtung des Türblatts 4 bewegt.

Beim Eintreten eines mechanischen unnachgiebigen Hindernisses in die Türöffnung während des Schließvorgangs wird durch das Vorsehen des Schutzelements 8 auch eine eventuelle Beschädigung der Schutztüre 3 vermieden.

Der Weg, den das Schutzelement 8 bezüglich des Türblatts 4 zurücklegen kann, ist auf die Schließgeschwindigkeit, ein Geschwindigkeitsprofil und/oder ein Bremsvermögen des Antriebs 13 der Schutztüre 3 abgestimmt. Hierfür sind die Steuerungseinrichtung 12 und der Antrieb 13 in sicherer Technik ausgeführt und das Geschwindigkeitsprofil wird auf den maximalen Öffnungsverfahrweg der Tür ausgelegt. Über das hinterlegte Geschwindigkeitsprofil sind alle frei programmierbaren Zwischenstellungen der Schutztüre 3 ebenfalls abgesichert. Die Steuerungseinrichtung 12 und der Antrieb der Schutztüre sind so ausgelegt, dass ein Abbremsweg der Schutztüre 3 immer kleiner ist, als der Weg, um den das Schutzelement 8 relativ zu dem Türblatt 4 beweglich ist.

## Patentansprüche

1. Laserbearbeitungsmaschine mit einer Schutztüre (3), die in einer Öffnungs- und Schließrichtung hin- und her bewegbar ist, wobei die Schutztüre (3) folgende Merkmale aufweist:
ein Türblatt (4), das mit einem Antrieb (13) zum Öffnen und Schließen der Schutztüre (3) verbunden ist, gekennzeichneit
ein Schutzelement (8), das auf einer Seite der Schutztüre (3) in der Schließrichtung angebracht ist und relativ zu dem Türblatt (4) in der Öffnungs- und Schließrichtung um einen vorbestimmten Weg beweglich ist, und
ein mit dem Schutzelement (8) verbundenes Schaltelement (10), das so ausgebildet ist, dass es in der Schließrichtung beim Auftreffen auf ein Hindernis schaltet,
wobei die Laserbearbeitungsmaschine (1) eine Steuerungseinrichtung (12) aufweist, die ein Signal des Schaltelements (10) verarbeitet, wobei die Steuerungseinrichtung (12) und der Antrieb (13) so angepasst sind, dass ein Abbremsweg der Schutztüre (3) immer kleiner ist als der vorbestimmte Weg, um den das Schutzelement (8) zu dem Türblatt (4) beweglich ist, und
wobei das Schaltelement (10) ein elastischer Bandschalter ist.

2. Laserbearbeitungsmaschine gemäß Anspruch 1, **dadurch gekennzeichnet, dass** die Schutztüre (3) einen Endanschlag (14) aufweist, und das Schutzelement (8) bezüglich der Schließrichtung elastisch gegen den Endanschlag (14) vorgespannt ist.

3. Laserbearbeitungsmaschine gemäß Anspruch 2, **dadurch gekennzeichnet, dass** das Schutzelement (8) durch mindestens zwei Federn (9) vorgespannt ist.

4. Laserbearbeitungsmaschine gemäß einem der Ansprüche 2 oder 3, **dadurch gekennzeichnet, dass** die Schutztüre (3) mindestens zwei Sensoren (15) aufweist, die so ausgebildet und angebracht sind, dass sie eine Position des Schutzelements (8) erfassen, in der das Schutzelement (8) an dem Endanschlag (14) anliegt.

5. Laserbearbeitungsmaschine gemäß einem der vorangehenden Ansprüche, **dadurch gekennzeichnet, dass** sie eine Laserschneidmaschine ist.

## Claims

1. Laser processing machine having a protection door (3) being able to be reciprocated in a closing and opening direction, whereby the protection door (3) comprises following features:
a door leaf (4) being connected to a drive (13) for opening and closing the protection door (3),
**characterized by**
a protection member (8) being attached at a side of the protection door (3) in the closing direction and being movable relative to the door leaf (4) about a predetermined distance in the opening and closing direction, and
a switching member (10), connected to the protection member (8), formed such that it switches in the closing direction when impinging onto an obstacle,
wherein the laser processing machine (1) comprises a control device (12) processing a signal of the switching member (10), whereby the control device (12) and the drive (13) are adapted such that a braking distance of the protection door (3) is always smaller than the predetermined distance about which the protection member (8) is movable with respect to the door leaf (4),
wherein the switching member (10) is an elastic ribbon switch.

2. Laser processing machine according to claim 1, **characterized in that** the protection door (3) comprises an end stop against the end stop (14) with respect to the closing direction.

3. Laser processing machine according to claim 2, **characterized in that** the protection member (8) is preloaded by at least two springs (9).

4. Laser processing machine according to any of the claims 2 or 3, **characterized in that** the protection door (3) comprises at least two sensors (15) formed and attached such that they detect a position of the protection member (8) where the protection member (8) abuts against the end stop (14).

5. Laser processing machine according any of the preceding claims, **characterized in that** it is a laser cutting machine.

## Revendications

1. Machine de traitement laser comprenant une porte de protection (3) mobile en va et vient dans une direction d'ouverture et dans une direction de fermeture, cette porte de protection (3) comprenant :
un vantail (4) relié à des organes d'entraînement (13) permettant d'ouvrir et de fermer la porte de protection (3),
**caractérisée par**
un élément de protection (8) qui est installé sur une face de la porte de protection (3) dans la direction de fermeture et peut être déplacé sur une course prédéfinie relativement au vantail (4), dans la direction d'ouverture et dans la direction de fermeture,
un élément de commutation (10) relié à l'élément de protection (8) et réalisé de sorte qu'il se commute dans la direction de fermeture lors d'un impact sur un obstacle,
cette machine de traitement laser (1) comprenant un dispositif de commande (12) qui traite un signal de l'élément de commutation (10), ce dispositif de commande (12) et les organes d'entraînements (13) étant adaptés de sorte que la course de freinage de la porte de protection (3) soit toujours inférieure à la course prédéfinie sur laquelle l'élément de protection (8) peut être déplacé par rapport au vantail (4),
l'élément de commutation (10) étant un commutateur à bande élastique.

2. Machine de traitement laser conforme à la revendication 1,
**caractérisée en ce que**
la porte de protection (3) comprend une butée de fin de course (14) et l'élément de protection (8) est précontraint élastiquement contre la butée de fin de course (14) relativement à la direction de fermeture.

3. Machine de traitement laser conforme à la revendication 2,
**caractérisée en ce que**
l'élément de protection (8) est précontraint par au moins deux ressorts (9).

4. Machine de traitement laser conforme à l'une des revendications 2 et 3,
**caractérisée en ce que**
la porte de protection (3) comporte au moins deux capteurs qui sont réalisés et montés de façon à pouvoir détecter la position de l'élément de protection (8) dans lequel l'élément de protection (8) s'applique contre la butée de fin de course (14).

5. Machine de traitement laser conforme à l'une des revendications précédentes,
**caractérisée en ce qu'**
elle est constituée par une machine de découpe laser.
